# FASCICULE DE BREVET EUROPEEN

(11) **EP 2 445 705 B1**
(45) Date de publication et mention de la délivrance du brevet: **15.03.2017**
(21) Numéro de dépôt: 10755113.7
(22) Date de dépôt: 25.06.2010
(51) Int. Cl.: B29C 70/86, F16C 7/00, B29C 65/00

(54) **PROCÉDÉ DE FABRICATION DE BIELLES COMPOSITES**
HERSTELLUNGSVERFAHREN VON VERBUNDSTANGEN
METHOD FOR MANUFACTURING COMPOSITE RODS

(30) Priorité: 26.06.2009 EP 09163904
(43) Date de publication de la demande: 02.05.2012
(73) Titulaire: BD INVENT, 4682 Heure-le-Romain (Oupeye) (BE)
(72) Inventeur: BOVEROUX, Benoît, B-4000 Rocourt (BE); DARDENNE, Daniel, B-4682 Heure-Le-Romain (BE)
(74) Mandataire: Lerho, Marc J. A.
(86) Numéro de dépôt international: PCT/EP2010/059062
(87) Numéro de publication internationale: WO 2010/149768

(56) Documents cités:
- WO-A1-2008/066606
- BE-A3- 1 016 715
- FR-A3- 2 645 070
- GB-A- 2 008 484
- JP-A- 59 050 216
- US-A- 4 704 918
- US-A1- 2003 125 117

## Description

### Objet de l'invention

La présente invention se rapporte à un procédé de fabrication de bielles composites. Elle se rapporte plus particulièrement mais non exclusivement à un procédé de fabrication de bielles utilisables dans le domaine aéronautique et aérospatial.

L'invention se rapporte également aux bielles obtenues selon le procédé et aux embouts utilisés pour la fabrication de la bielle.

### Etat de la technique

Il est connu qu'une bielle est un composant soit raidissant, soit de transmission de mouvement. Les efforts qui vont être transmis par la bielle sont principalement des efforts de traction, de compression et de flexion sur base du couple résistif en bout de bielle.

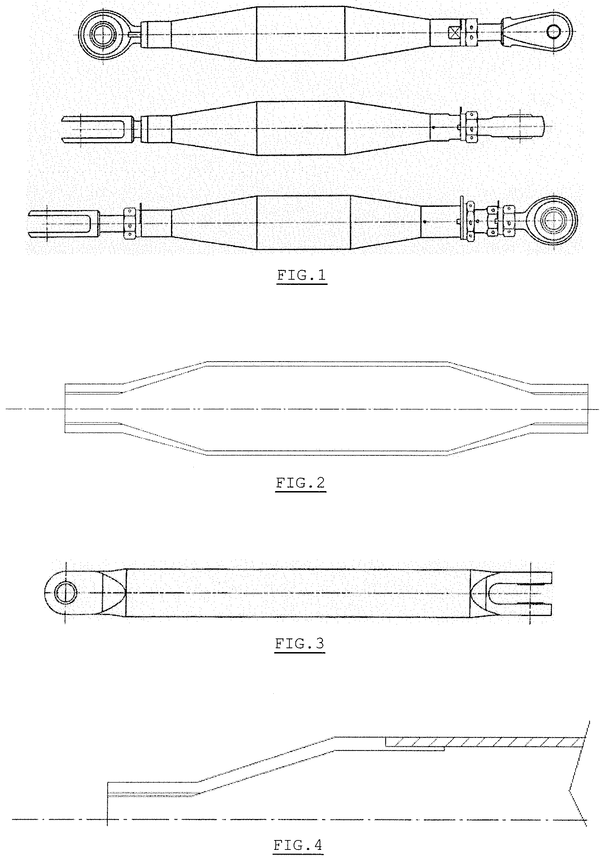

Dans le domaine aéronautique, on fait usage d'un nombre élevé de bielles. On peut citer l'utilisation de bielles dans les organes de commande de vol, du train d'atterrissage, d'ouverture des portes, etc. A titre illustratif, la figure 1 représente un schéma général de bielle avec différents moyens non-exhaustifs de fixation aux extrémités; ces moyens assurent la fixation de la bielle aux organes auxquels elle doit transmettre un mouvement ou desquels elle doit recevoir un mouvement ou assurer une fixation.

La bielle est un composant qui doit remplir plusieurs critères. Elle doit pouvoir résister à des variations thermiques importantes, la bielle étant soumise à des températures oscillant entre -55 et 120°C. Elle doit également avoir un rapport tenue mécanique/poids le plus élevé possible. Pour ce faire, la bielle est de conception creuse et l'épaisseur des parois de la partie centrale du corps de bielle est plus fine que les parties situées aux extrémités où se trouve la fixation des embouts comme ce sera décrit ci-dessous (voir fig.2).

Dans leur conception la plus commune, les bielles sont réalisées en aluminium ou en inox selon leur application.

Il existe également sur le marché des bielles en matériau composite.

Elles peuvent être de type monobloc tel que montré à la figure 3. Le procédé de fabrication d'une telle bielle est décrit dans le document FR 2 705 610 A1. Le procédé consiste à déposer des fibres pré-imprégnées sur un mandrin extractible de forme correspondant à celle de la bielle. L'ensemble obtenu est alors polymérisé avec application d'une pression homogène sur toute la surface externe de l'ensemble et, finalement, après extraction du mandrin, la bielle est usinée aux cotes requises. Ce procédé est relativement onéreux et nécessite la présence d'un mandrin de forme complexe et son retrait.

On connaît également du document GB 2 008 484 A un procédé de fabrication de bielles où une matière plastique renforcée de fibres englobe un mandrin perdu et la partie d'ancrage de chaque garniture terminale (moyen de fixation) de manière telle que, lorsque la matière plastique est polymérisée, la bielle soit d'une seule pièce. Le mandrin perdu est un tube métallique à paroi mince, un tube en matière expansée ou un tube en matière plastique renforcée de fibres et à paroi mince. Dans cette forme d'exécution, l'utilisation de matériaux différents pour le mandrin et la couche polymérisée a pour effet que des différences de dilation thermique vont apparaître à l'usage. Elles vont se traduire par l'apparition de fissures et de décollements à l'interface. Dans le cas où le tube est également réalisé dans un matériau composite à matrice organique, l'utilisation de résines différentes pour le mandrin et la couche polymérisée se traduit par des problèmes de contamination et de vieillissement. De manière générale, des discontinuités et porosités sont observées à travers la section du corps de bielle lorsque des matériaux différents sont utilisés pour la réalisation de celui-ci.

On connaît également du document US 2003/0125117 A1 une bielle composite destinée à transmettre des efforts de torsion entre les embouts de la bielle. La bielle comporte un tube intérieur avec un embout monté à chaque extrémité. Un matériau composite composé de résine et de fibres couvre le tube intérieur et au moins une partie de chaque embout. Le tube intérieur est préférentiellement constitué d'un fin tube métallique.

Du document JP 59 050216 A, on connaît également une bielle composite où une couche de fibres pré-imprégnées est enroulée autour d'un corps intérieur et des embouts fixés aux extrémités du corps intérieur.

On connaît aussi du document FR 645 070 A3 un élément de structure pouvant entre autre être utilisé pour fabriquer des bielles de traction. Dans cet élément de structure, les pièces extrêmes sont liées mécaniquement à une âme en matière thermoplastique, de caractéristique mécanique adaptée à l'application, âme sur laquelle est enroulé l'enroulement filamentaire de renfort. Cette âme peut être renforcée à coeur par une nappe de renfort.

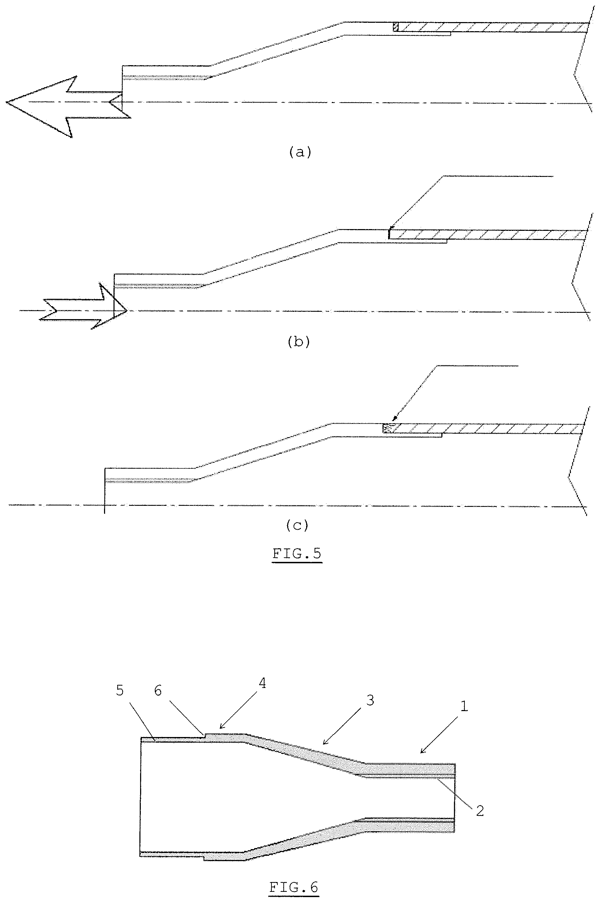

Il existe aussi des bielles avec un embout métallique rapporté et collé au corps de bielle composite (voir fig.4: le corps de bielle et l'embout sont respectivement représentés avec et sans hachures). Un tel assemblage a pour désavantage de fragiliser le corps de bielle. Lors de la traction sur l'embout métallique de la bielle, la colle travaille de manière élastique et provoque un espacement entre l'embout métallique et la partie en composite (voir fig.5(a)). Lors de la compression de l'embout sur la bielle, la colle travaille toujours de manière élastique et provoque un appui entre l'embout métallique et la partie en composite (voir fig.5(b)). En cycle de fatigue, ce phénomène va générer de la fissuration sur le corps de bielle composite et réduire de manière importante la durée de vie de la bielle (voir fig.5(c)).

On connaît ainsi du document BE 1 016 715 A, une bielle comprenant un tube central composite assemblé par collage à deux embouts en matière métallique.

### Buts de l'invention

La présente invention vise à fournir une solution qui permette de s'affranchir des inconvénients de l'état de la technique.

La présente invention vise plus particulièrement à réaliser des bielles présentant une structure parfaitement homogène, dépourvue de toute porosité et répondant aux critères de tenue mécanique et thermique.

La présente invention a aussi pour but de réaliser des bielles à partir d'un procédé proche des procédés traditionnels mais générant des coûts de fabrication faibles tout en évitant les inconvénients d'un assemblage collé.

### Principaux éléments caractéristiques de l'invention

La présente invention se rapporte à un procédé de fabrication d'une bielle comportant un corps de bielle en matériau composite et au moins un embout, ledit embout comportant successivement une première partie cylindrique creuse, une partie conique creuse et une seconde partie cylindrique creuse, ladite seconde partie cylindrique creuse se terminant par une extrémité de diamètre extérieur réduit délimitée par un épaulement, ledit procédé comportant successivement au moins les étapes suivantes:
a) on réalise un corps intérieur au moyen des sous-étapes suivantes:
   - on réalise un tube par enroulement de fibres pré-imprégnées sur un premier mandrin en rotation, ledit tube ayant une paroi d'épaisseur égale à la hauteur de l'épaulement et un diamètre extérieur égal au diamètre extérieur maximum de la seconde partie cylindrique creuse,
   - on polymérise le tube,
   - on retire le premier mandrin du tube,
   - on met à longueur et on dépolit la face extérieure du tube formant ainsi le corps intérieur;
b) on rapporte une extrémité du corps intérieur à l'extrémité de diamètre extérieur réduit de chaque embout, ladite extrémité du corps intérieur prenant appui sur l'épaulement de l'embout;
c) on insère une première partie d'un deuxième mandrin dans la première partie cylindrique creuse de chaque embout et on place un mors d'entraînement à l'extrémité libre d'une seconde partie du deuxième mandrin;
d) on enroule lesdites fibres pré-imprégnées sur la surface externe d'un ensemble formé par le corps intérieur, le ou les embout(s) et la ou les seconde(s) partie(s) du ou des deuxième(s) mandrin(s) exempte(s) de mors, lesdites fibres formant alors un corps extérieur;
e) après retrait du ou des mors, on polymérise le corps intérieur et le corps extérieur pour former un corps monobloc polymérisé;
f) on retire le ou les second (s) mandrin (s) et on met à longueur le corps monobloc polymérisé.

Selon des modes particuliers de l'invention, le procédé comporte au moins une ou une combinaison appropriée des caractéristiques suivantes:
- les fibres pré-imprégnées enroulées dans les étapes a) et d) sont identiques, c'est-à-dire qu'elles comportent la même résine et la même fibre, et sont continues;
- le diamètre intérieur de la première partie cylindrique creuse est sensiblement constant;
- le diamètre extérieur de la première partie cylindrique creuse est sensiblement constant et la partie conique creuse a une épaisseur de paroi allant en s'affinant vers la seconde partie cylindrique creuse;
- le diamètre extérieur de la première partie cylindrique creuse, partant de son extrémité libre, est d'abord constant se réduisant ensuite graduellement et finalement s'élargissant à nouveau pour s'inscrire dans la continuité de la face extérieure de la partie conique creuse, ladite partie conique creuse ayant une épaisseur de paroi allant en s'affinant vers la seconde partie cylindrique creuse;
- le diamètre extérieur de la première partie cylindrique creuse, partant de son extrémité libre, est d'abord constant se réduisant ensuite graduellement et finalement s'élargissant à nouveau pour s'inscrire dans la continuité de la face extérieure de la partie conique creuse, ladite partie conique creuse allant en s'évasant vers la seconde partie cylindrique creuse et présentant une discontinuité où le diamètre intérieur de la partie conique creuse augmente de manière abrupte;
- l'embout comporte un insert intégrant la première partie cylindrique creuse et partiellement la partie conique creuse jusqu'à la discontinuité, et comporte une partie complémentaire, aussi appelée couche, intégrant le reste de la partie conique creuse et la seconde partie cylindrique creuse;
- le procédé comporte au moins quatre étapes supplémentaires pour la fabrication dudit embout, lesdites étapes étant mises en oeuvre avant la réalisation de l'étape b) du procédé de fabrication de la bielle et étant les suivantes:
   1) on réalise l'insert;
   2) on monte l'insert sur un troisième mandrin comprenant successivement une première partie cylindrique de forme complémentaire à la première partie cylindrique creuse de l'embout, une première partie conique de forme complémentaire à la partie conique creuse dudit insert, une butée de hauteur sensiblement égale à l'épaisseur de la paroi de l'insert à l'extrémité libre de sa partie conique creuse, et une seconde partie conique allant en s'évasant vers une seconde partie cylindrique, ladite première partie cylindrique du troisième mandrin s'insérant dans la première partie cylindrique creuse de l'embout et ladite extrémité de l'insert venant prendre appui sur la butée;
   3) on enroule une ou plusieurs couches desdites fibres pré-imprégnées autour de la seconde partie cylindrique et de la seconde partie conique du troisième mandrin et partiellement autour de l'insert à hauteur de la discontinuité;
   4) la ou les couches de fibres pré-imprégnées sont polymérisées dans un four pour former la couche et on enlève ensuite le troisième mandrin;
- l'épaulement est réalisé en plaçant une bague de serrage entre l'étape 3) et l'étape 4) ou, préférentiellement, par usinage après l'étape 4) de polymérisation;
- l'insert est métallique;
- les fibres pré-imprégnées sont identiques à celles utilisées pour la réalisation des étapes a) et d) et la couche est polymérisée avec le corps intérieur et le corps extérieur dans l'étape e) pour former un corps monobloc polymérisé;
- l'embout est métallique, en matériau plastique à haute résistance ou en carbone;
- les fibres sont des fibres de carbone;
- la face intérieure de la partie cylindrique creuse de l'embout est munie de moyens de fixation de la bielle;
- les moyens de fixation comportent un taraudage;
- l'extrémité libre de la partie conique creuse de l'insert a un diamètre extérieur inférieur au diamètre intérieur du corps de bielle;
- la première partie du deuxième mandrin est cylindrique et a un diamètre sensiblement égal au diamètre intérieur de la première partie cylindrique creuse de l'embout et la seconde partie du deuxième mandrin est cylindrique et a un diamètre sensiblement égal au diamètre extérieur de la première partie cylindrique creuse de l'embout;
- la mise à longueur du corps monobloc polymérisé dans l'étape f) s'effectue par découpe à hauteur de l'extrémité libre de chaque embout;
- l'embout comporte des sillons de tournage sur sa face extérieure.

La présente invention se rapporte également à une bielle comportant un corps de bielle en matériau composite et au moins un embout, ledit embout comportant successivement une première partie cylindrique creuse, une partie conique creuse et une seconde partie cylindrique creuse, ladite seconde partie cylindrique creuse se terminant par une extrémité avec un diamètre extérieur réduit délimitée par un épaulement, et ledit corps de bielle comportant un corps monobloc polymérisé enserrant l'embout ou un insert de l'embout sur toute sa face extérieure.

### Brève description des figures

La figure 1, déjà mentionnée, représente le schéma général de bielles métalliques selon l'état de la technique avec différents moyens de fixation de la bielle.
La figure 2, déjà mentionnée, représente une vue en coupe longitudinale d'une bielle selon l'état de la technique, illustrant la variation de l'épaisseur des parois.
La figure 3, déjà mentionnée, représente une vue en coupe longitudinale d'une bielle de type monobloc selon l'état de la technique.
La figure 4, déjà mentionnée, représente une vue en coupe partielle et longitudinale d'un corps de bielle avec embouts rapportés et collés selon l'état de la technique.
La figure 5, déjà mentionnée, représente schématiquement les sollicitations en traction (fig.5(a)) et compression (fig.5(b)) dans un corps de bielle avec embouts rapportés et collés selon l'état de la technique ainsi que les dégâts qui en résultent (fig.5(c)).
La figure 6 représente une vue en coupe longitudinale d'un embout selon une première forme de réalisation, utilisé lors de la fabrication de la bielle selon l'invention.
La figure 7 représente une vue en coupe longitudinale d'un embout selon une deuxième forme de réalisation, utilisé lors de la fabrication de la bielle selon l'invention.
La figure 8 représente une vue en coupe longitudinale d'un embout selon une troisième forme de réalisation, utilisé lors de la fabrication de la bielle selon l'invention.
La figure 9 représente une vue en coupe partielle et longitudinale d'un embout selon l'invention présentant des sillons de tournage.
La figure 10 représente une vue en coupe longitudinale de l'insert réalisé dans l'étape 1) lors de la fabrication de l'embout selon la troisième forme de réalisation.
La figure 11 représente une vue en coupe longitudinale du montage de l'insert sur le mandrin dans l'étape 2) lors de la fabrication de l'embout selon la troisième forme de réalisation.
La figure 12 représente une vue en coupe longitudinale de l'étape 3) d'enroulement filamentaire lors de la fabrication de l'embout selon la troisième forme de réalisation.
La figure 13 représente une vue de côté de la réalisation du corps intérieur de la bielle par enroulement filamentaire selon l'invention (étape a)).
La figure 14 représente une vue en coupe longitudinale du corps intérieur de la bielle obtenu à l'étape a).
La figure 15 représente une vue en coupe longitudinale de l'assemblage des embouts avec le corps intérieur de la bielle (étape b)).
La figure 16 représente une vue en coupe longitudinale du montage des mandrins dans l'étape c) de fabrication de la bielle.
La figure 17 représente une vue en coupe longitudinale du montage des mors d'entraînement dans l'étape c) de fabrication de la bielle.
La figure 18 représente une vue en coupe longitudinale de la réalisation par enroulement filamentaire du corps extérieur dans l'étape d) de fabrication de la bielle.
La figure 19 représente des vues en coupe longitudinale de l'ensemble avant (a) et après polymérisation (b) dans l'étape e) de fabrication de la bielle.
La figure 20 représente une vue en coupe longitudinale de la pièce (bielle) finie après enlèvement des mandrins et une opération de découpe (étape f)), les embouts étant réalisés selon la première forme de réalisation.
La figure 21 représente une vue en coupe longitudinale de la pièce (bielle) finie après enlèvement des mandrins et une opération de découpe (étape f)), les embouts étant réalisés selon la troisième forme de réalisation.
La figure 22 représente schématiquement les sollicitations en compression (a) et en traction (b) dans la bielle réalisée selon l'invention avec embouts selon la première forme de réalisation.
La figure 23 représente schématiquement les sollicitations en compression (a) et en traction (b) dans la bielle réalisée selon l'invention avec embouts selon la deuxième forme de réalisation.

### Légende

(1) Première partie cylindrique creuse de l'embout
(2) Taraudage
(3) Partie conique creuse de l'embout
(4) Seconde partie cylindrique creuse de l'embout
(5) Extrémité de la seconde partie cylindrique creuse de l'embout avec un diamètre extérieur réduit
(6) Epaulement
(7) Discontinuité dans la partie conique creuse de l'embout
(8) Insert d'un embout
(9) Partie complémentaire, aussi appelée couche, d'un embout
(10) Troisième mandrin utilisé pour la fabrication d'un embout
(11) Première partie cylindrique du mandrin
(12) Première partie conique du mandrin
(13) Butée du mandrin
(14) Seconde partie conique du mandrin
(15) Seconde partie cylindrique du mandrin
(16) Fibre pré-imprégnée
(17) Premier mandrin utilisé pour la fabrication du corps intérieur
(18) Corps intérieur
(19) Deuxième mandrin utilisé pour la fabrication du corps extérieur
   (19a) Première partie du deuxième mandrin (19)
   (19b) Seconde partie du deuxième mandrin (19)
(20) Mors d'entrainement
(21) Corps extérieur
(22) Corps monobloc polymérisé

### Description détaillée de l'invention

La conception de la bielle selon l'invention se situe à mi-chemin entre la bielle monobloc et la bielle avec embout métallique rapporté et collé.

Dans la présente invention, la bielle comporte un corps de bielle composite et au moins un embout. La bielle peut comporter un embout à chaque extrémité ou comporter un embout à une seule extrémité et à l'autre extrémité un roulement serti directement dans la bielle. Les figures ci-dessous illustreront donc à titre non limitatif le procédé de fabrication de la bielle dans le cas où les deux extrémités comportent un embout.

On s'attardera d'abord à décrire les embouts et leur procédé de fabrication. Ensuite, on détaillera le procédé de fabrication de la bielle constituée du ou des embouts et du corps de bielle.

### Description détaillée des embouts et de leur procédé de fabrication

L'embout selon l'invention revêt préférentiellement trois formes différentes de réalisation. L'embout pourra cependant revêtir toute autre forme utile pour la réalisation du procédé de fabrication de bielle tel qu'il sera décrit ci-dessous.

Les embouts selon les trois formes de réalisation, illustrées respectivement aux figures 6 à 8, ont en commun d'être constitués de trois parties principales. Chaque embout présente une première partie cylindrique creuse 1 suivie d'une partie conique creuse 3 s'évasant vers une seconde partie cylindrique creuse 4. On entend par partie cylindrique creuse de l'embout que l'embout comporte une percée de forme cylindrique. Le terme "intérieur" sera utilisé pour désigner la face en regard de la percée cylindrique par opposition au terme "extérieur" désignant l'autre face.

La première partie cylindrique creuse 1 constitue l'extrémité libre de l'embout après assemblage avec le corps de bielle et la seconde partie cylindrique creuse 4 est destinée à être assemblée au corps de bielle. La première partie cylindrique creuse 1 est munie sur sa face intérieure, de moyens de fixation de la bielle. Dans les exemples illustrés aux figures 6 à 8, elle est taraudée (taraudage 2) pour recevoir ultérieurement un élément de fixation de la bielle. L'élément de fixation peut également faire partie intégrante de l'embout; l'embout peut, par exemple, être en forme de fourche (non représenté).

Selon les trois formes de réalisation de l'embout, la seconde partie cylindrique creuse 4 se termine par une extrémité de diamètre extérieur réduit 5 délimitée par un épaulement 6.

La figure 6 présente les différentes parties constituant l'embout selon une première forme de réalisation de l'invention. Selon cette forme de réalisation, la première partie cylindrique creuse 1 présente une paroi d'épaisseur sensiblement égale le long de l'axe longitudinal de l'embout et la partie conique creuse 3 a une épaisseur de paroi allant en s'affinant vers la seconde partie cylindrique creuse 4.

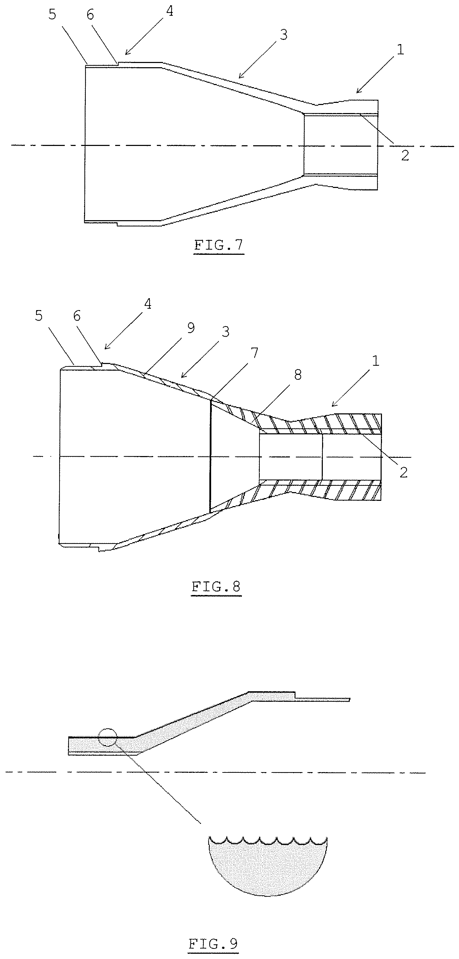

L'embout selon une deuxième forme de réalisation de l'invention, illustré à la figure 7, a pour caractéristique que la première partie cylindrique creuse 1 présente une variation d'épaisseur de paroi le long de l'axe longitudinal de l'embout, tout en gardant toujours une percée de forme cylindrique avec un diamètre sensiblement constant. En partant de l'extrémité libre, le diamètre extérieur de la première partie cylindrique creuse 1 est d'abord constant avant de se réduire graduellement et de s'élargir à nouveau pour s'inscrire dans la continuité de la face extérieure de la partie conique creuse 3.

L'embout selon une troisième forme de réalisation de l'invention, illustré à la figure 8, comporte une première partie cylindrique creuse 1 sensiblement comparable à celle selon la deuxième forme de réalisation de l'embout et comporte une seconde partie cylindrique creuse 4 sensiblement comparable à celle selon la première et la deuxième forme de réalisation. L'embout selon la troisième forme de réalisation a pour caractéristique que la paroi de la partie conique creuse 3 présente une discontinuité 7. Au niveau de la discontinuité et dans le sens d'une section croissante de la partie conique, le diamètre intérieur de la partie conique augmente de manière abrupte. Cette discontinuité trouve son origine dans le procédé de fabrication de l'embout qui sera détaillé ci-dessous.

Selon cette troisième forme de réalisation, l'embout comporte un insert 8 intégrant la première partie cylindrique creuse 1 et partiellement la partie conique creuse 3 jusqu'à la discontinuité 7, et comporte une partie complémentaire 9, qu'on appellera aussi couche, intégrant le reste de la partie conique creuse 3 et la seconde partie cylindrique creuse 4. Selon l'invention, l'insert 8 et la couche 9 ont été rendus solidaires l'un de l'autre lors de la fabrication de l'embout.

Selon la première et la deuxième forme de réalisation, les embouts sont préférentiellement métalliques (par ex. en aluminium, en inox 17-4 ou en titane) et sont usinés de manière traditionnelle; ils présentent sur leur face extérieure des sillons de tournage réalisés lors du tournage avec une forte avance (voir fig.9). Ces sillons vont permettre l'accrochage entre l'embout et la fibre de renfort de la bielle. Les embouts peuvent également être en matériau plastique à haute résistance, en carbone ou dans tout autre matériau approprié pour l'application visée.

Selon la troisième forme de réalisation de l'embout, l'insert 8 est de préférence métallique et la couche 9 est de préférence en matériau composite. Cet embout fait appel à un procédé de fabrication innovant qui comporte au moins quatre étapes.

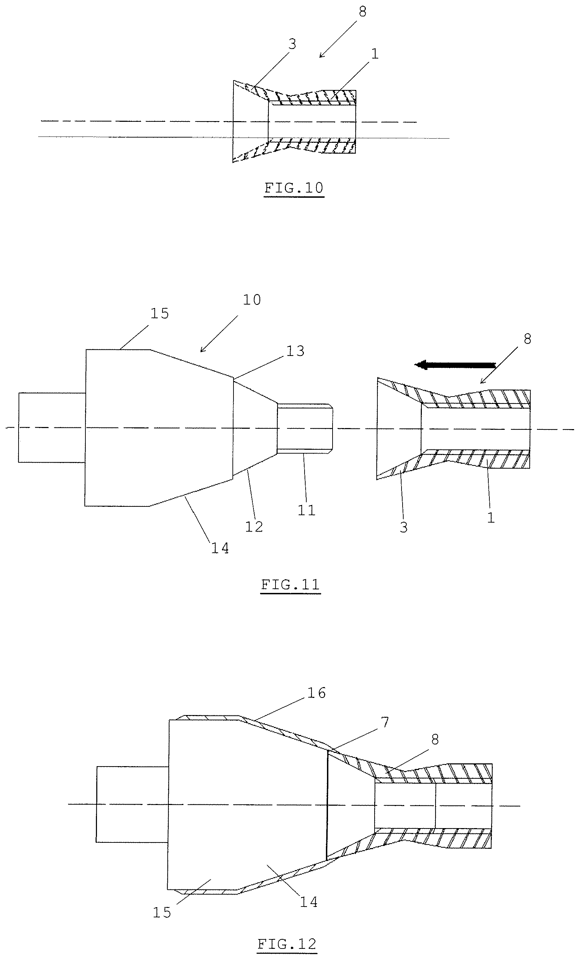

Dans une première étape 1), on réalise l'insert 8 qui peut être métallique comme susmentionné ou réalisé dans tout autre matériau adapté pour son utilisation (voir fig.10). Le diamètre extérieur maximum de la partie conique 3 de l'insert est de taille réduite par rapport au diamètre intérieur du corps de la future bielle.

Dans une deuxième étape 2) illustrée à la figure 11, l'insert 8 est monté sur un mandrin 10 métallique. Le mandrin 10 comporte une première partie cylindrique 11 qui vient s'insérer dans la première partie cylindrique creuse 1 de l'insert et comporte une première partie conique 12 de forme complémentaire à la partie conique 3 de l'insert, suivie d'une butée 13 contre laquelle l'insert 8 vient s'appuyer. La hauteur de la butée 13 est sensiblement égale à l'épaisseur de la paroi de l'insert 8 à son extrémité. A la suite de la butée 13, le mandrin 10 comporte une seconde partie conique 14 s'évasant vers une seconde partie cylindrique 15 de forme complémentaire à la couche 9 de l'embout à réaliser.

Dans une troisième étape 3) illustrée à la figure 12, on dépose par enroulement filamentaire une ou plusieurs couches de fibres pré-imprégnées 16 autour de la seconde partie cylindrique 15 et de la seconde partie conique 14 du mandrin, et, partiellement autour de l'insert 8 à hauteur de la discontinuité 7. Selon la présente invention, les fibres pré-imprégnées 16 sont identiques à celles qui seront utilisées lors de la réalisation du corps de bielle et sont préférentiellement en fibres de carbone.

Dans une quatrième étape 4), la ou les couches de fibres pré-imprégnées 16 sont polymérisées dans un four pour former la couche 9; on enlève ensuite le mandrin 10 (non illustré).

L'épaulement 6 tel que présenté à la figure 8 sur la pièce finale est réalisé en plaçant une bague de serrage avant polymérisation (entre l'étape 3) et 4)) ou, préférentiellement, par usinage traditionnel après l'étape 4) de polymérisation.

Le procédé tel que décrit ci-dessus s'applique indifféremment pour la réalisation de l'embout gauche ou droit d'une bielle.

De manière similaire aux embouts selon la première et deuxième forme de réalisation, l'embout comporte un sillon de tournage sur sa face extérieure.

### Description détaillée du procédé de fabrication de la bielle

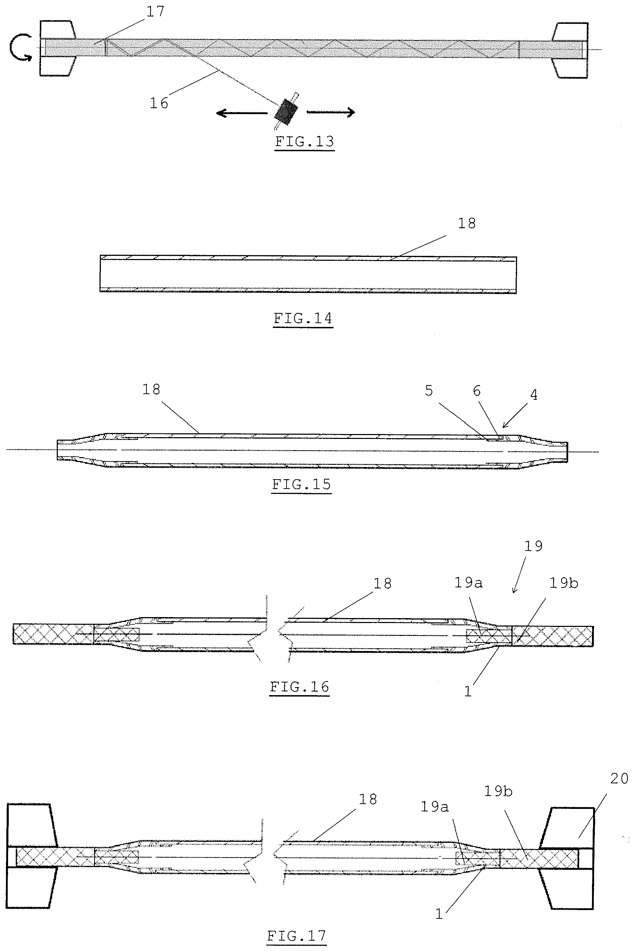

Selon la présente invention, la bielle est fabriquée en six étapes. A titre illustratif, le procédé de fabrication de bielles est illustré aux figures 13 à 20 avec des embouts selon la première forme de réalisation. Le procédé avec des embouts selon la deuxième et troisième forme de réalisation est similaire.

Une première étape a) consiste à réaliser un corps intérieur par le procédé traditionnel d'enroulement filamentaire qui consiste à enrouler une fibre pré-imprégnée 16 sur un mandrin lisse 17 avec un angle donné sur base d'un mouvement de va-et-vient comme illustré à la figure 13. Préférentiellement, les fibres enroulées sont des fibres en carbone. Cependant, toute autre fibre à haute résistance pourra également convenir.

On réalise un tube d'épaisseur égale à la hauteur de l'épaulement 6 précité. Le diamètre intérieur du tube est fixé par le diamètre intérieur du corps de la bielle à réaliser et sur base de calculs de dimensionnement déterminant la charge maximale en compression que le tube peut supporter sans se déformer au niveau de la zone d'appui entre l'embout et le tube, c'est-à-dire au niveau de l'épaulement.

L'ensemble tube et mandrin est ensuite disposé dans un four pour polymériser la résine pré-imprégnée dans les fibres et ainsi rigidifier le tube. Après la polymérisation, le mandrin 17 est retiré et le tube est mis à longueur et dépoli pour obtenir une surface d'accrochage. Le corps intérieur 18 ainsi obtenu est représenté à la figure 14.

Une deuxième étape b) consiste à rapporter un embout à chaque extrémité du corps intérieur. L'embout rapporté est celui selon la première, la deuxième ou la troisième forme de réalisation tel qu'illustré respectivement aux figures 6 à 8 ou tout embout de forme adaptée. L'extrémité du corps intérieur 18 est rapportée sur l'extrémité de diamètre extérieur réduit 5 et prend appui sur l'épaulement 6. De cette manière, la surface externe du corps intérieur 18 prolonge celle de la seconde partie cylindrique 4 des embouts (voir fig.15).

Dans une troisième étape c), deux mandrins 19 sont montés respectivement aux extrémités libres des embouts (voir fig.16). Chaque mandrin de forme cylindrique comporte deux parties de diamètres différents. Une première partie 19a du mandrin comporte un cylindre de diamètre sensiblement égal au diamètre intérieur de la première partie cylindrique creuse des embouts 1 et une seconde partie 19b comporte un cylindre de diamètre sensiblement égal au diamètre extérieur de la première partie cylindrique creuse des embouts 1. Durant le montage, la première partie 19a du mandrin 19 est insérée dans la partie cylindrique creuse 1 de l'embout. Un mors d'entrainement 20 est ensuite disposé à l'extrémité libre de la seconde partie 19b du mandrin 19 (voir fig.17).

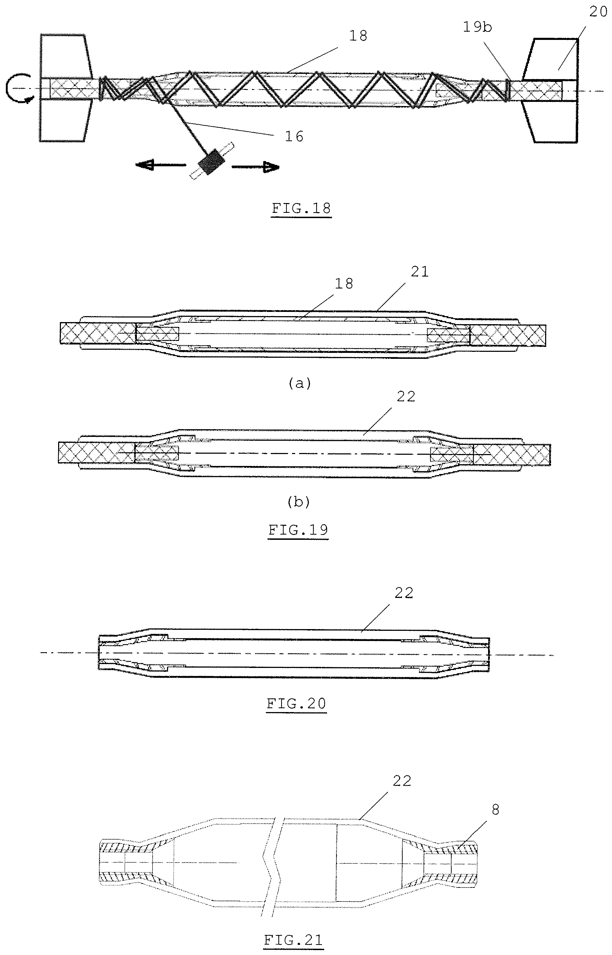

La quatrième étape d) représentée à la figure 18 consiste à enrouler sur la surface externe de l'ensemble formé par le corps intérieur 18, les embouts, et la seconde partie 19b des mandrins dépourvue de mors, des fibres pré-imprégnées 16 par le procédé d'enroulement filamentaire. Les fibres vont former une couche autour de cet ensemble que l'on désignera corps extérieur 21 (voir fig.19(a)). De manière à réaliser ultérieurement un corps monobloc comme décrit ci-dessous, les fibres pré-imprégnées utilisées dans cette étape sont les mêmes (même fibre, même résine) que celles utilisées dans l'étape a). De même, pour assurer la continuité de l'enroulement filamentaire, la fibre n'est pas interrompue entre les étapes a) et d).

La cinquième étape e) consiste, après retrait des mors d'entraînement 20, à polymériser l'ensemble. Les figures 19(a) et 19(b) présentent respectivement l'ensemble avant et après polymérisation. Après polymérisation, le corps intérieur 18 et le corps extérieur 21 forment un corps monobloc polymérisé 22 qui constituera le corps de bielle. Dans le cas particulier de l'embout selon la troisième forme de réalisation tel qu'illustré à la figure 8, la couche 9 constituée de fibres pré-imprégnées 16 identiques à celles utilisées pour la réalisation du corps de bielle fait également partie du corps monobloc polymérisé 22. Lors du démontage des mors dans cette étape, la fibre est coupée de la bobine et la partie du corps monobloc polymérisé comportant la fibre coupée est enlevée lors de la mise à longueur de la bielle à la dernière étape f).

Dans la dernière étape f), les mandrins 19 sont retirés et le corps monobloc polymérisé 22 est découpé à hauteur de l'extrémité libre des embouts (voir fig.20). La pièce ainsi obtenue forme la bielle selon l'invention. La figure 21 présente la bielle réalisée avec les embouts selon la troisième forme de réalisation où la couche 9 de l'embout est intégrée dans le corps monobloc 22.

### Avantages du procédé selon l'invention

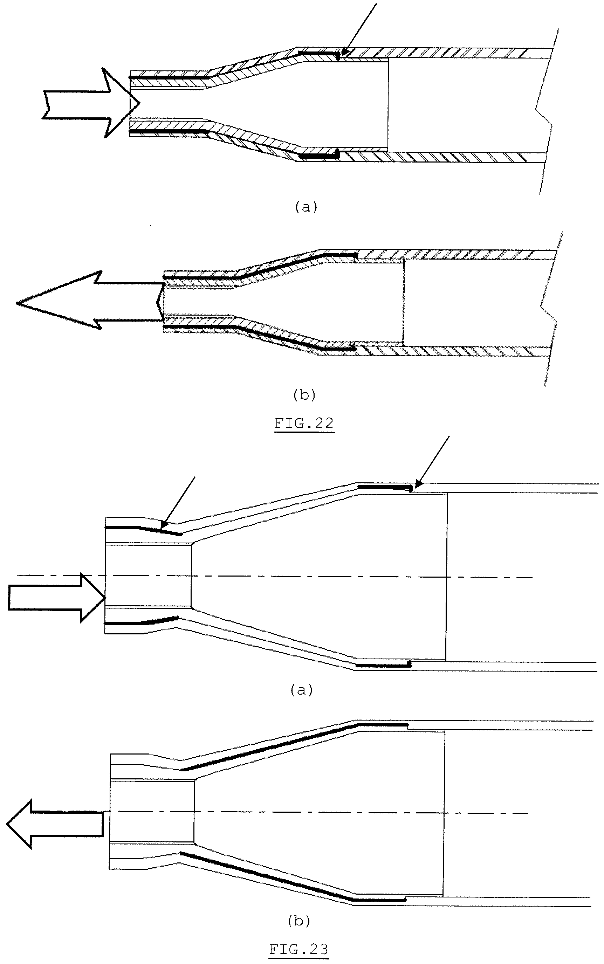

- Selon la présente invention, les fibres pré-imprégnées utilisées pour les étapes a) et d) sont identiques (même résine, même fibre) et il y a une continuité entre les enroulements filamentaires (même fil) pour le corps intérieur et le corps extérieur. L'utilisation d'une même résine permet de réaliser un corps monobloc, lors de la post-cuisson à l'étape e), qui sera exempt de tout problème de dilation thermique différentielle. La continuité de l'enroulement filamentaire est importante pour garantir un placement correct des fibres et garantir un processus automatisé à 100%. La fabrication d'un corps monobloc et la continuité de l'enroulement filamentaire permet en outre de réaliser un produit exempt de toute discontinuité ou porosité.
- La fabrication de bielles avec des embouts réalisés selon la troisième forme de réalisation permet un allègement de la bielle. D'une part, parce qu'une partie de l'embout est en matériau composite et, d'autre part, parce que la quantité de matière de l'embout est moindre. En effet, au niveau de la discontinuité, le diamètre intérieur de l'embout augmente ce qui correspond, en d'autres mots, à un évidement de la matière.
- Contrairement à l'assemblage collé de l'état de la technique où les embouts sont accolés au corps de bielle, dans la présente invention, les embouts sont insérés à l'intérieur du corps de bielle. Cette conception de bielle va permettre de reprendre les efforts de compression. Dans le cas d'une bielle avec des embouts réalisés selon la première forme de réalisation, les zones surlignées dans la figure 22(a) sont, d'une part, sollicitées par effet d'accrochage entre l'embout et le corps de bielle et sont, d'une autre part, sollicitées par appui direct entre le corps de bielle en fibre de carbone et l'embout au niveau de l'épaulement. En cas de chargements trop importants, seule la zone d'appui au niveau de l'épaulement doit être fracturée pour permettre le déplacement de l'embout (voir petite flèche). La géométrie de l'embout selon la deuxième forme de réalisation présente comme avantage que deux zones, à la place d'une, doivent être fracturées en cas de surcharge. Tel qu'illustré à la figure 23(a) par les petites flèches, il y a la zone d'appui au niveau de l'épaulement et la zone où la première partie cylindrique creuse de l'embout présente un rétrécissement. Cela signifie concrètement que la géométrie de l'embout selon la deuxième forme de réalisation permet de reprendre plus d'efforts. La conception de la bielle selon l'invention va permettre également de reprendre les efforts de traction quelle que soit la géométrie de l'embout. Dans le cas d'une bielle avec des embouts réalisés selon la première forme de réalisation telle qu'illustrée à la figure 22(b), l'embout transmet l'effort de traction au corps de bielle par la première partie cylindrique creuse, par la partie conique et partiellement par la seconde partie cylindrique creuse. L'effort de traction est donc directement transmis au corps de bielle. Dans le cas d'une bielle avec des embouts réalisés selon la deuxième forme de réalisation telle qu'illustrée à la figure 23(b), l'embout transmet l'effort de traction au corps de bielle par la partie conique et partiellement par la seconde partie cylindrique creuse. Dans le cadre d'une sollicitation alternée en traction-compression, l'embout, quelle que soit sa géométrie, ne peut se déplacer dans le corps de bielle et ainsi ne peut générer un phénomène de fatigue sur le corps en fibre de carbone et de matage du corps en fibre de carbone.
- Le procédé selon l'invention a également pour avantage de permettre la réalisation d'une pièce complexe par des procédés traditionnels d'enroulement filamentaire, ce qui génère des coûts de fabrication faibles. Le gain se situe dans la mise en oeuvre des procédés et dans la conception elle-même de la bielle.

## Revendications

1. Procédé de fabrication d'une bielle adaptée pour le domaine aéronautique et aérospatial, ladite bielle comportant un corps de bielle en matériau composite et au moins un embout, ledit embout comportant successivement une première partie cylindrique creuse (1), une partie conique creuse (3) et une seconde partie cylindrique creuse (4), ladite seconde partie cylindrique creuse (4) se terminant par une extrémité de diamètre extérieur réduit (5) délimitée par un épaulement (6), ledit procédé comportant successivement au moins les étapes suivantes:
a) on réalise un corps intérieur (18) au moyen des sous-étapes suivantes:
- on réalise un tube par enroulement de fibres pré-imprégnées (16) sur un premier mandrin (17) en rotation, ledit tube ayant une paroi d'épaisseur égale à la hauteur de l'épaulement (6) et un diamètre extérieur égal au diamètre extérieur maximum de la seconde partie cylindrique creuse (4),
- on polymérise le tube,
- on retire le premier mandrin (17) du tube,
- on met à longueur et on dépolit la face extérieure du tube formant ainsi le corps intérieur (18);
b) on rapporte une extrémité du corps intérieur (18) à l'extrémité de diamètre extérieur réduit de chaque embout (5), ladite extrémité du corps intérieur (18) prenant appui sur l'épaulement (6) de l'embout;
c) on insère une première partie (19a) d'un deuxième mandrin (19) dans la première partie cylindrique creuse (1) de chaque embout et on place un mors d'entraînement (20) à l'extrémité libre d'une seconde partie (19b) du deuxième mandrin (19);
d) on enroule les fibres pré-imprégnées (16) qui sont identiques à celles de l'étape a), c'est-à-dire qu'elles comportent la même résine et la même fibre, sur la surface externe d'un ensemble formé par le corps intérieur (18), le ou les embout(s) (1,3,4) et la ou les seconde(s) partie(s) (19b) du ou deuxième(s) mandrin (s) (19) exempte(s) de mors (20), lesdites fibres (16) formant alors un corps extérieur (21);
e) après retrait du ou des mors (20), on polymérise le corps intérieur (18) et le corps extérieur (21) pour former un corps monobloc polymérisé (22);
f) on retire le ou les deuxième(s) mandrin(s) (19) et on met à longueur le corps monobloc polymérisé (22).

2. Procédé selon la revendication 1, **caractérisé en ce que** les fibres pré-imprégnées (16) enroulées dans les étapes a) et d) sont continues.

3. Procédé selon la revendication 1 ou 2, **caractérisé en ce que** le diamètre intérieur de la première partie cylindrique creuse (1) est sensiblement constant.

4. Procédé selon la revendication 3, **caractérisé en ce que** le diamètre extérieur de la première partie cylindrique creuse (1) est sensiblement constant et **en ce que** la partie conique creuse (3) a une épaisseur de paroi allant en s'affinant vers la seconde partie cylindrique creuse (4).

5. Procédé selon la revendication 3, **caractérisé en ce que** le diamètre extérieur de la première partie cylindrique creuse (1), partant de son extrémité libre, est d'abord constant se réduisant ensuite graduellement et finalement s'élargissant à nouveau pour s'inscrire dans la continuité de la face extérieure de la partie conique creuse (3), ladite partie conique creuse (3) ayant une épaisseur de paroi allant en s'affinant vers la seconde partie cylindrique creuse (4).

6. Procédé selon la revendication 3, **caractérisé en ce que** le diamètre extérieur de la première partie cylindrique creuse (1), partant de son extrémité libre, est d'abord constant se réduisant ensuite graduellement et finalement s'élargissant à nouveau pour s'inscrire dans la continuité de la face extérieure de la partie conique creuse (3), ladite partie conique creuse (3) allant en s'évasant vers la seconde partie cylindrique creuse (4) et présentant une discontinuité (7) où le diamètre intérieur de la partie conique creuse (3) augmente de manière abrupte.

7. Procédé selon la revendication 6, **caractérisé en ce que** l'embout comporte un insert (8) intégrant la première partie cylindrique creuse (1) et partiellement la partie conique creuse (3) jusqu'à la discontinuité (7), et comporte une partie complémentaire (9), aussi appelée couche, intégrant le reste de la partie conique creuse (3) et la seconde partie cylindrique creuse (4).

8. Procédé selon la revendication 7, **caractérisé en ce qu'**il comporte au moins quatre étapes supplémentaires pour la fabrication dudit embout, lesdites étapes étant mises en oeuvre avant la réalisation de l'étape b) du procédé de fabrication de la bielle et étant les suivantes:
1) on réalise l'insert (8);
2) on monte l'insert (8) sur un troisième mandrin (10) comprenant successivement une première partie cylindrique (11) de forme complémentaire à la première partie cylindrique creuse de l'embout (1), une première partie conique (12) de forme complémentaire à la partie conique creuse dudit insert (3), une butée (13) de hauteur sensiblement égale à l'épaisseur de la paroi de l'insert à l'extrémité libre de sa partie conique creuse (3), et une seconde partie conique (14) allant en s'évasant vers une seconde partie cylindrique (15), ladite première partie cylindrique (11) du troisième mandrin (10) s'insérant dans la première partie cylindrique creuse (1) de l'embout et ladite extrémité de l'insert (8) venant prendre appui sur la butée (13);
3) on enroule une ou plusieurs couches desdites fibres pré-imprégnées (16) autour de la seconde partie cylindrique (15) et de la seconde partie conique (14) du troisième mandrin (10) et partiellement autour de l'insert (8) à hauteur de la discontinuité (7);
4) la ou les couches de fibres pré-imprégnées (16) sont polymérisées dans un four pour former la couche (9) et on enlève ensuite le troisième mandrin (10).

9. Procédé selon la revendication 8, **caractérisé en ce que** l'épaulement (6) est réalisé en plaçant une bague de serrage entre l'étape 3) et l'étape 4) ou, préférentiellement, par usinage après l'étape 4) de polymérisation.

10. Procédé selon l'une quelconque des revendications 7 à 9, **caractérisé en ce que** l'insert (8) est métallique.

11. Procédé selon la revendication 8, **caractérisé en ce que** les fibres pré-imprégnées (16) sont identiques à celles utilisées pour la réalisation des étapes a) et d) et **en ce que** la couche (9) est polymérisée avec le corps intérieur (18) et le corps extérieur (21) dans l'étape e) pour former un corps monobloc polymérisé (22).

12. Procédé selon la revendication 4 ou 5, **caractérisé en ce que** l'embout est métallique, en matériau plastique à haute résistance ou en carbone.

## Patentansprüche

1. Verfahren zur Herstellung einer Stange, die für den Bereich der Luft- und Raumfahrt geeignet ist, wobei die Stange einen Stangenkörper aus Verbundmaterial und mindestens eine Spitze aufweist, wobei die Spitze aufeinanderfolgend einen ersten hohlen zylindrischen Teil (1), einen hohlen konischen Teil (3) und einen zweiten hohlen zylindrischen Teil (4) aufweist, wobei der zweite hohle zylindrische Teil (4) in einem Ende mit reduzierten Außendurchmesser (5) endet, das von einem Absatz (6) begrenzt ist, wobei das Verfahren aufeinanderfolgend mindestens die folgenden Schritte aufweist:
a) Herstellen eines inneren Körpers (18) mittels der folgenden Unterschritte:
- Herstellen eines Rohrs durch Wickeln von vorimprägnierten Fasern (16) auf eine erste rotierende Hülse (17), wobei das Rohr eine Wand mit einer Dicke hat, die der Höhe des Absatzes (6) entspricht, und einen Außendurchmesser, der dem maximalen Außendurchmesser des zweiten hohlen zylindrischen Teils (4) entspricht,
- Polymerisieren des Rohrs,
- Entfernen der ersten Hülse (17) aus dem Rohr,
- Zuschneiden und Mattieren der Außenseite des Rohrs, das somit den inneren Körper (18) bildet;
b) Ansetzen eines Endes des inneren Körpers (18) an das Ende mit reduziertem Außendurchmesser jeder Spitze (5), wobei sich das Ende des inneren Körpers (18) auf dem Absatzes (6) der Spitze abstützt,
c) Einsetzen eines ersten Teils (19a) einer zweiten Hülse (19) in den ersten hohlen zylindrischen Teil (1) jeder Spitze und Platzieren einer Antriebsbacke (20) am freien Ende eines zweiten Teils (19b) der zweiten Hülse (19);
d) Wickeln der vorimprägnierten Fasern (16), die denen von Schritt a) entsprechen, das heißt, dass sie dasselbe Harz und dieselbe Faser aufweisen, auf die äußere Fläche einer Gruppe, die von dem inneren Körper (18), der oder den Spitze(n) (1, 3, 4) und dem oder den zweiten Teil(en) (19b) der zweiten Hülse(en) (19) gebildet ist, mit Ausnahme der Backe(n) (20), wobei die Fasern (16) somit einen äußeren Körper (21) bilden,
e) nach Entfernen der Backe(n) (20), Polymerisieren des inneren Körpers (18) und des äußeren Körpers (21), um einen polymerisierten Einblock-Körper (22) zu bilden,
f) Entfernen der zweiten Hülse(n) (19) und Zuschneiden des polymerisierten Einblock-Körpers(22).

2. Verfahren nach Anspruch 1, **dadurch gekennzeichnet, dass** die in den Schritten a) und d) gewickelten vorimprägnierten Fasern (16) kontinuierlich sind.

3. Verfahren nach Anspruch 1 oder 2, **dadurch gekennzeichnet, dass** der Innendurchmesser des ersten hohlen zylindrischen Teils (1) etwa konstant ist.

4. Verfahren nach Anspruch 3, **dadurch gekennzeichnet, dass** der Außendurchmesser des ersten hohlen zylindrischen Teils (1) etwa konstant ist und dass der hohle konische Teil (3) eine Wanddicke hat, die sich in Richtung des zweiten hohlen zylindrischen Teils (4) reduziert.

5. Verfahren nach Anspruch 3, **dadurch gekennzeichnet, dass** der Außendurchmesser des ersten hohlen zylindrischen Teils (1), ausgehend von seinen freien Ende, zunächst konstant ist, sich dann graduell reduziert und schließlich erneut erweitert, um sich in die Kontinuität der Außenseite des hohlen konischen Teils (3) einzuschreiben, wobei der hohle konische Teil (3) eine Wanddicke hat, die sich in Richtung des zweiten hohlen zylindrischen Teils (4) reduziert.

6. Verfahren nach Anspruch 3, **dadurch gekennzeichnet, dass** der Außendurchmesser des ersten hohlen zylindrischen Teils (1), ausgehend von seinem freien Ende, zunächst konstant ist, sich dann graduell reduziert und schließlich erneut erweitert, um sich in die Kontinuität der Außenseite des hohlen konischen Teils (3) einzuschreiben, wobei sich der hohle konische Teil (3) in Richtung des zweiten hohlen zylindrischen Teils (4) erweitert und eine Diskontinuität (7) aufweist, wo der Innendurchmesser des hohlen konischen Teils (3) abrupt zunimmt.

7. Verfahren nach Anspruch 6, **dadurch gekennzeichnet, dass** die Spitze einen Einsatz (8) aufweist, der den ersten hohlen zylindrischen Teil (1) und teilweise den hohlen konischen Teil (3) bis zur Diskontinuität (7) integriert, und einen komplementären Teil (9), auch Schicht genannt, aufweist, der den Rest des hohlen konischen Teils (3) und den zweiten hohlen zylindrischen Teil (4) integriert.

8. Verfahren nach Anspruch 7, **dadurch gekennzeichnet, dass** es mindestens vier zusätzliche Schritte für die Herstellung der Spitze aufweist, wobei die Schritte vor der Durchführung von Schritt b) des Verfahrens zur Herstellung der Stange durchgeführt werden und die folgenden sind:
1) Herstellen des Einsatzes (8),
2) Setzen des Einsatzes (8) auf eine dritte Hülse (10), umfassend aufeinanderfolgend einen ersten zylindrischen Teil (11) komplementärer Form zum ersten hohlen zylindrischen Teil der Spitze (1), einen ersten konischen Teil (12) komplementärer Form zum hohlen konischen Teil des Einsatzes (3), einen Anschlag (13) mit einer Höhe, die etwa der Dicke der Wand des Einsatzes am freien Ende seines hohlen konischen Teils (3) entspricht, und einen zweiten konischen Teil (14), der sich in Richtung eines zweiten zylindrischen Teils (15) erweitert, wobei der erste zylindrische Teil (11) der dritten Hülse (10) in den ersten hohlen zylindrischen Teil (1) der Spitze eingreift und das sich Ende des Einsatzes (8) auf dem Anschlag (13) abstützt,
3) Wickeln einer oder mehrerer Schichten vorimprägnierter Fasern (16) um den zweiten zylindrischen Teil (15) und den zweiten konischen Teil (14) der dritte Hülse (10) und teilweise um den Einsatz (8) in Höhe der Diskontinuität (7),
4) Polymerisieren der Schicht(en) vorimprägnierter Fasern (16) in einem Ofen, um die Schicht (9) zu bilden und danach Entfernen der dritten Hülse (10).

9. Verfahren nach Anspruch 8, **dadurch gekennzeichnet, dass** der Absatzes (6) durch Platzieren eines Spannrings zwischen Schritt 3) und Schritt 4) oder, vorzugsweise, durch Bearbeiten nach Polymerisationsschritt 4).

10. Verfahren nach einem der Ansprüche 7 bis 9, **dadurch gekennzeichnet, dass** der Einsatz (8) metallisch ist.

11. Verfahren nach Anspruch 8, **dadurch gekennzeichnet, dass** die vorimprägnierten Fasern (16) identisch mit denen sind, die für die Durchführung der Schritte a) und d) verwendet werden und dass die Schicht (9) mit dem inneren Körper (18) und dem äußeren Körper (21) in Schritt e) polymerisiert wird, um einen polymerisierten Einblock-Körper (22) zu bilden.

12. Verfahren nach Anspruch 4 oder 5, **dadurch gekennzeichnet, dass** die Spitze metallisch, aus hochfestem Kunststoff oder aus Karbon ist.

## Claims

1. A method for manufacturing a connecting rod suitable for the aeronautics and aerospace field, said connecting rod including a connecting rod body made from a composite material and at least one end-piece, said end-piece successively including a first hollow cylindrical part (1), a hollow conical part (3) and a second hollow cylindrical part (4), said second hollow cylindrical part (4) ending with an end having a reduced outer diameter (5) defined by a shoulder (6), said method successively including at least the following steps:
a) an inner body (18) is made using the following sub-steps:
- a tube is made by winding pre-impregnated fibers (16) on a first rotating mandrel (17), said tube having a wall with a thickness equal to the height of the shoulder (6) and an outer diameter equal to the maximum outer diameter of the second hollow cylindrical part (4),
- the tube is polymerized,
- the first mandrel (17) is removed from the tube,
- the outer face of the tube is cut to length and etched, thus forming the inner body (18);
b) one end of the inner body (18) is attached to the end with a reduced outer diameter of each end-piece (5), said end of the inner body (18) bearing on the shoulder (6) of the end-piece;
c) a first part (19a) of a second mandrel (19) is inserted in the first hollow cylindrical part (1) of each end-piece and a driving jaw (20) is placed at the free end of a second part (19b) of the second mandrel (19);
d) the preimpregnated fibers (16), which are identical to those of step a), i.e., they include the same resin and the same fiber, are wound on the outer surface of an assembly formed by the inner body (18), the end-piece(s) (1, 3, 4) and the second part(s) (19b) of the second mandrel(s) (19) free of jaws (20), said fibers (16) then forming an outer body (21);
e) after removing the jaw(s) (20), the inner body (18) and the outer body (21) are polymerized to form a polymerized single-piece body (22);
f) the second mandrel(s) (19) are removed and the polymerized single-piece body (22) is cut to length.

2. The method according to claim 1, **characterized in that** the preimpregnated fibers (16) wound in steps a) and d) are continuous.

3. The method according to claim 1 or 2, **characterized in that** the inner diameter of the first hollow cylindrical part (1) is substantially constant.

4. The method according to claim 3, **characterized in that** the outer diameter of the first hollow cylindrical part (1) is substantially constant and **in that** the hollow conical part (3) has a wall thickness narrowing toward the second hollow cylindrical part (4).

5. The method according to claim 3, **characterized in that** the outer diameter of the first hollow cylindrical part (1), starting from its free end, is first constant, then gradually becoming smaller, and finally widening again to fit into the continuation of the outer face of the hollow conical part (3), said hollow conical part (3) having a wall thickness narrowing toward the second hollow cylindrical part (4).

6. The method according to claim 3, **characterized in that** the outer diameter of the first hollow cylindrical part (1), starting from its free end, is first constant, then gradually becoming smaller, and finally widening again to fit into the continuation of the outer face of the hollow conical part (3), said hollow conical part (3) flaring toward the second hollow cylindrical part (4) and having a discontinuity (7) where the inner diameter of the hollow conical part (3) increases abruptly.

7. The method according to claim 6, **characterized in that** the end-piece includes an insert (8) incorporating the first hollow cylindrical part (1) and part of the hollow conical part (3), up to the discontinuity (7), and includes a complementary part (9), also called layer, integrating the rest of the hollow conical part (3) and the second hollow cylindrical part (4).

8. The method according to claim 7, **characterized in that** it includes at least four additional steps for the manufacturing of said end-piece, said steps being carried out before the performance of step b) of the method for manufacturing the connecting rod and being as follows:
1) the insert (8) is produced;
2) the insert (3) is mounted on a third mandrel (10) successively comprising a first cylindrical part (11) with a shape complementary to the first hollow cylindrical part of the end-piece (1), a first conical part (12) with a shape complementary to the hollow conical part of said insert (3), a stop (13) with a height substantially equal to the thickness of the wall of the insert at the free end of the hollow conical part (3), and a second conical part (14) flaring toward a second cylindrical part (15), said first cylindrical part (11) of the third mandrel (10) being inserted in the first hollow cylindrical part (1) of the end-piece and said end of the insert (8) bearing on the stop (13) ;
3) one or several layers of said preimpregnated fibers (16) are wound around the second cylindrical part (15) and the second conical part (14) of the third mandrel (10) and partially around the insert (8) at the height of the discontinuity (7);
4) the layer(s) of preimpregnated fibers (16) are polymerized in an oven to form the layer (9) and the third mandrel (10) is then removed.

9. The method according to claim 8, **characterized in that** the shoulder (6) is made by placing a gripping ring between step 3) and step 4), or preferably, by machining after the polymerization step 4).

10. The method according to any one of claims 7 to 9, **characterized in that** the insert (8) is made from metal.

11. The method according to claim 8, **characterized in that** the preimpregnated fibers (16) are identical to those used to carry out steps a) and d) and **in that** the layer (9) is polymerized with the inner body (18) and the outer body (21) in step e) to form a polymerized single-piece body (22).

12. The method according to claim 4 or 5, **characterized in that** the end-piece is made from metal, high-strength plastic or carbon.
